# EUROPEAN PATENT APPLICATION

(11) **EP 2 913 789 A1**
(43) Date of publication of application: **02.09.2015**
(21) Application number: 15155726.1
(22) Date of filing: 19.02.2015
(51) Int. Cl.: G06Q 30/00

(54) **MERCHANDISE SALES DATA PROCESSING APPARATUS AND MERCHANDISE SALES DATA PROCESSING SYSTEM**

(30) Priority: 28.02.2014 JP 2014038692
(71) Applicant: Toshiba TEC Kabushiki Kaisha, Tokyo 141-8562 (JP)
(72) Inventor: Seki, Tetsuya, Shinagawa-ku, Tokyo 141-8562 (JP)
(74) Representative: Takeuchi, Maya

(57) **Abstract**

There is provided a merchandise sales data processing apparatus, including: a scanner which obtains an intrinsic merchandise code which is provided in a sales merchandise; a display device for an operator which displays information with respect to a salesperson; a display device for a customer which displays information with respect to a settlement customer or at least one of settlement-awaiting customers; an imaging portion which images the settlement-awaiting customer; an image interpreting portion which calculates properties from data imaged by the imaging portion; a customer display data storing portion which stores data displayed for each property, with respect to the display device for a customer; and a display condition setting portion which sets a display condition of customer display data.

## Description

### FIELD

Embodiments described herein relate generally to a merchandise sales data processing apparatus which is used when purchasing merchandise, and a merchandise sales data processing system.

### BACKGROUND

In the related art, when purchasing merchandise, settlement is performed by a merchandise payment terminal which is called a point of sales (POS) terminal and which is a merchandise sales data processing apparatus. The POS terminal includes a display device for an operator which is used when the operator who performs settlement confirms information, and a display device for a customer which is used when the customer confirms information.

In recent years, the size of a screen of the display device for a customer became larger. Since the size of the screen is large, the display device displays not only simply a merchandise name or price, but also a commercial video, such as a display for new merchandise. In order to contribute to increasing sales, it is desirable to figure out age or sex of the customer and to provide the customer appropriate information. However, when the appropriate information is provided to the customer who is already in the middle of settlement, there is a concern that the customer does not purchase the merchandise since the customer rarely stops settlement, goes to take the merchandise, and stands in line again for settlement, and thus, the provided information does not contribute to increasing sales as expected.

An example of related art includes JP-A-2001-93046.

### DESCRIPTION OF THE DRAWINGS

FIG. 1 is a view illustrating a system configuration example according to an embodiment.
FIG. 2 is an external appearance view of a configuration of a main part of a POS terminal according to the embodiment.
FIG. 3 is a block diagram of a configuration of a control circuit of the POS terminal according to the embodiment.
FIG. 4 is a view illustrating a camera installation position with respect to a customer display device according to the embodiment.
FIG. 5 is a view illustrating a position of a person who performs settlement and people who wait for settlement according to the embodiment.
FIG. 6 is a view illustrating a position of the person who performs settlement and people who wait for settlement according to the embodiment.
FIG. 7 is a processing flow chart of displaying settlement information to the person who performs the settlement and sales promotion information to people who wait for settlement, according to the embodiment.
FIG. 8 is an example of the provided information created for each customer group, such as for each age group and sex group, according to the embodiment.
FIG. 9 is an example of installation of a plurality of customer display devices according to the embodiment.
FIG. 10 is an example of installation of the plurality of customer display devices according to the embodiment.

### DETAILED DESCRIPTION

The exemplary embodiment is to provide a merchandise sales data processing apparatus which predicts properties, such as age or sex of a customer before settlement of merchandise and displays appropriate information for the customer in a display device for a customer, and a merchandise sales data processing system.

There is provided a merchandise sales data processing apparatus according to the embodiment, including: a scanner which obtains an intrinsic merchandise code which is provided in a sales merchandise; a display device for an operator which displays information with respect to a salesperson; a display device for a customer which displays information with respect to a settlement customer or at least one of settlement-awaiting customers; an imaging portion which images the settlement-awaiting customer; an image interpreting portion which calculates properties from data imaged by the imaging portion; a customer display data storing portion which stores data displayed for each property, with respect to the display device for a customer; and a display condition setting portion which sets a display condition of customer display data.

Hereinafter, a system configuration example according to an embodiment will be described with reference to the drawings.

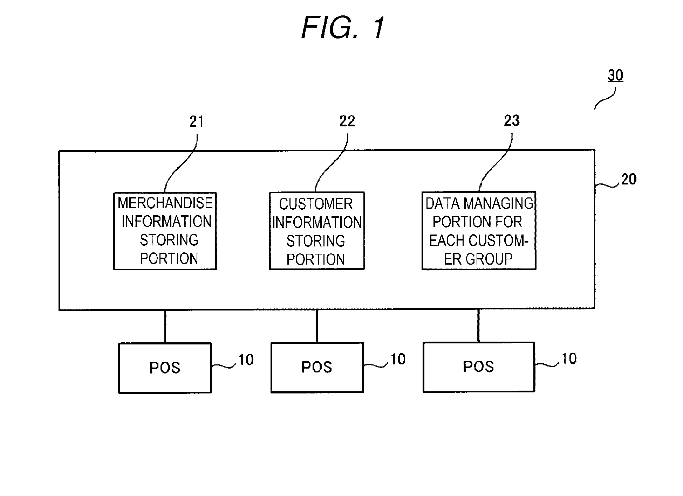

FIG. 1 is a block diagram illustrating the entire configuration of a system according to the embodiment. A merchandise sales data processing system 30 includes a POS terminal 10 which is a plurality of merchandise sales data processing apparatuses, and a store server 20 which is network-connected to be able to receive and send data to the POS terminal 10.

In addition, the store server 20 includes a merchandise information storing portion 21 which stores merchandise information, such as price of the merchandise to be sold, a customer information storing portion 22 which stores various types of information of a customer, and a data managing portion for each customer group 23 which manages the provided information which is created for each property, such as age or sex.

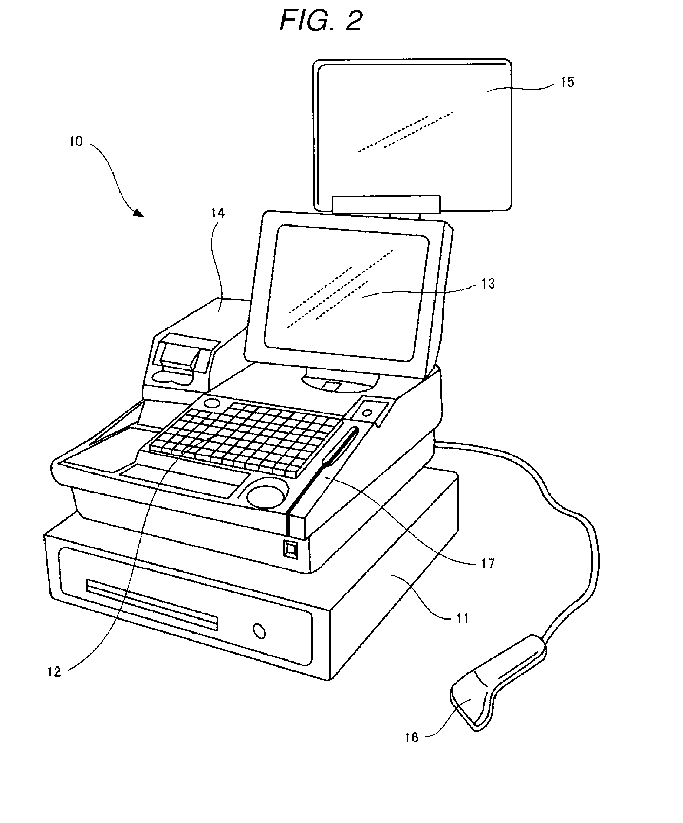

FIG. 2 illustrates an external appearance view of the POS terminal 10.

The POS terminal 10 includes a drawer 11 which stores paper money or hard currency, a keyboard 12 which inputs the merchandise information or the like, a display device for an operator 13 which uses a liquid crystal display or the like that displays various types of information which is given to the operator, a receipt printer 14 which outputs a receipt or a discount coupon after the settlement, a display device for a customer 15 which uses the liquid crystal display or the like that displays various types of information which is given to the customer, a bar code scanner 16 which reads out a bar code that is printed or attached to the merchandise and obtains a merchandise code which is included in the bar code, and a reader-writer 17 which performs reading and writing of the data between the POS terminal 10 and a membership card which stores customer information.

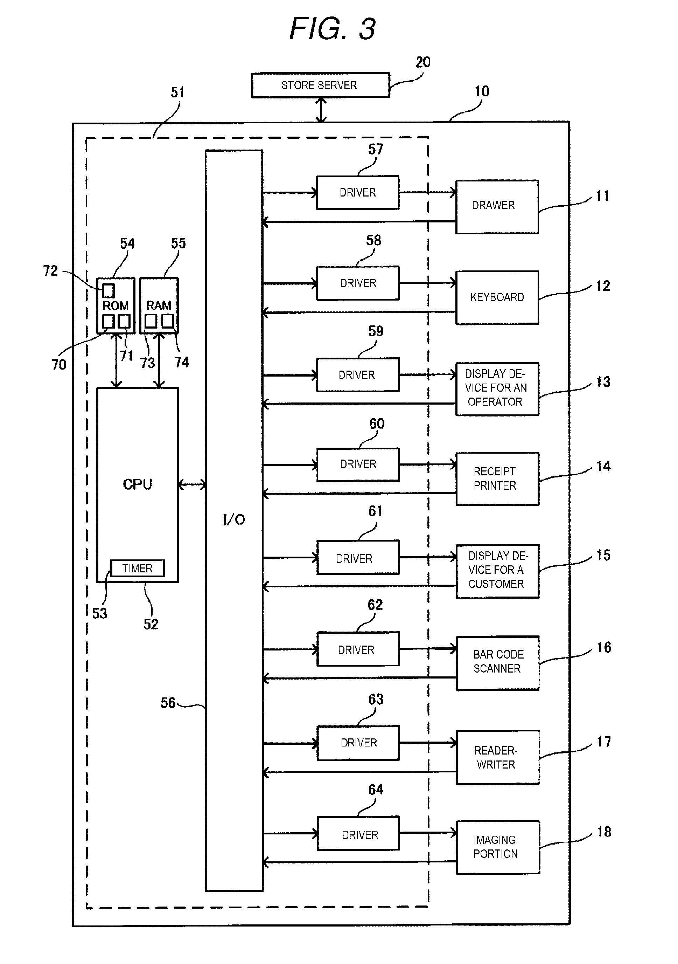

FIG. 3 is a block diagram illustrating a configuration of a control circuit of the POS terminal 10 according to the embodiment.

A control portion 51 performs each control, such as opening and closing of the drawer 11, receiving input information by the keyboard 12, displaying various types of information to the display device for an operator 13, outputting the receipt to the receipt printer 14 and issuing the receipt, displaying various types of information to the display device for a customer 15, receiving the input information by the bar code scanner 16, reading and writing data by the reader-writer 17, and imaging and interpreting the customer by an imaging portion 18.

The control portion 51 is configured of, for example, a microcomputer which performs linking with the store server 20 and various types of controls. According to a program, a central processing unit (CPU) 52 of the control portion 51 opens and closes the drawer 11, receives the input information by the keyboard 12, displays various types of information to the display device for an operator 13, outputs the receipt to the receipt printer 14 and issues the receipt, displays various types of information to the display device for a customer 15, receives the input information by the bar code scanner 16, reads and writes the data by the reader-writer 17, and images the customer by the imaging portion 18.

In addition, the CPU 52 is provided with a timer 53 as a unit which performs time setting and time control.

In the control portion 51, a ROM 54 and a RAM 55 are installed as a main storage unit which accommodates a control program executed by the CPU 52, or data in the middle of control or calculation.

The ROM 54 is a read-only memory with the control program or a table, and the RAM 55 is a temporary writing memory which accommodates the data in the middle of calculation, or the like. In addition, the ROM 54 includes a customer analysis program 70 which will be described later, a customer display data storing portion 71, and a display condition setting portion 72. The RAM 55 includes a merchandise information temporary storing portion 73 which will be described later, and a customer information temporary storing portion 74.

In the control portion 51, an input and output unit (I/O) 56 which performs exchanging various types of data with the store server 20 is provided. The I/O 56 is connected to the CPU 52, the ROM 54, and the RAM 55 via a bus.

As a unit of taking out a control output, first, second, third, fourth, fifth, sixth, seventh, and eighth drivers 57, 58, 59, 60, 61, 62, 63, and 64 are connected to the I/O 56.

The first driver 57 supplies a necessary driving output to the drawer 11. The second driver 58 supplies the necessary driving output to the keyboard 12. The third driver 59 supplies the display driving output which performs various types of display to the display device for an operator 13. The fourth driver 60 supplies the driving output to the receipt printer 14. The fifth driver 61 supplies the display driving output which performs various types of display to the display device for a customer 15. The sixth driver 62 supplies the driving output to the bar code scanner 16. The seventh driver 63 supplies the necessary driving output to the reader-writer 17. The eighth driver 64 supplies the necessary driving output to the imaging portion 18.

The CPU 52 of the control portion 51 drives opening of the drawer 11 or confirming closing of the drawer 11, via the driver 57.

The CPU 52 of the control portion 51 accepts the information input by the keyboard 12, via the driver 58.

The CPU 52 of the control portion 51 displays the settlement information and various types of information of the POS terminal 10 to the display device for an operator 13, via the driver 59.

The CPU 52 of the control portion 51 prints the settlement information, such as a merchandise name or price, by the receipt printer 14, cuts a paper sheet, and issues the receipt, via the driver 60. In addition, if necessary, the discount coupon or the like is issued.

The CPU 52 of the control portion 51 displays the settlement information or the commercial information to the display device for a customer 15, via the driver 61.

The CPU 52 of the control portion 51 accepts the information scanned by the bar code scanner 16, via the driver 62.

The CPU 52 of the control portion 51 reads and writes customer membership card data by the reader-writer 17, via the driver 63.

The CPU 52 of the control portion 51 performs imaging by the imaging portion 18, via the driver 64.

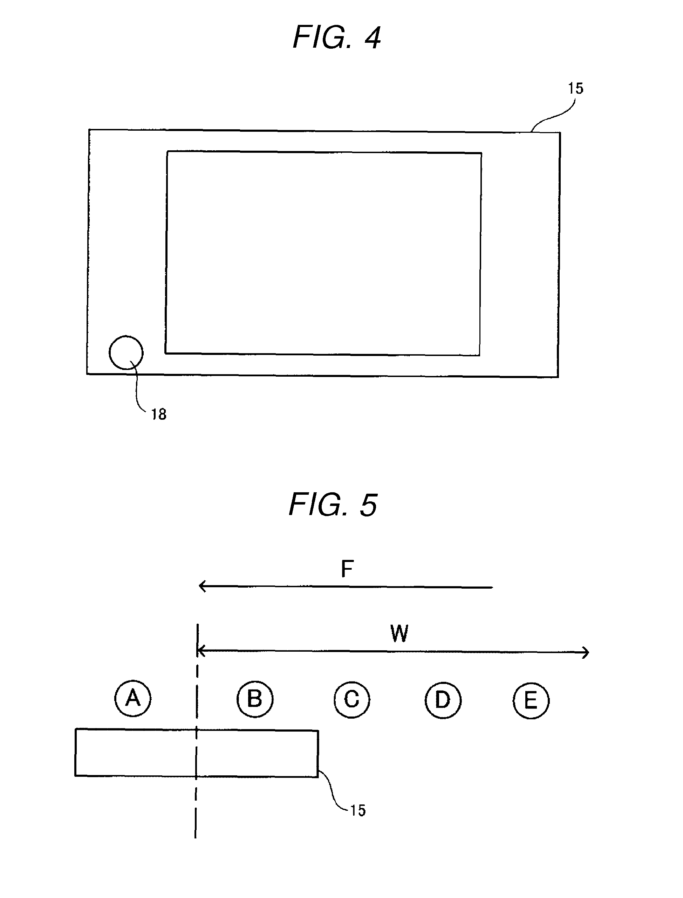

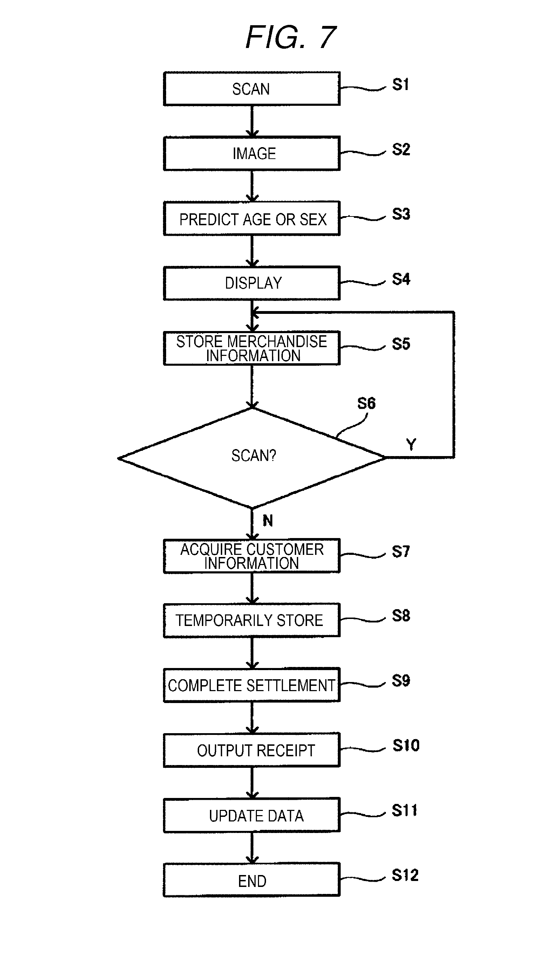

Hereinafter, a method of providing the most appropriate information in consideration of information, such as predicted age or sex, to the display device for a customer 15 by the system, will be described with reference to FIGS. 4 to 8.

The customer brings purchase desired merchandise to a location where the POS terminal 10 is installed, which is a settlement location of a store. Another customer also brings purchase desired merchandise to the location where the POS terminal 10 is installed, which is the settlement location of the store. When there is a customer (settlement customer) who is already in the middle of settlement processing, another customer (settlement-awaiting customer) waits for the next settlement processing.

Similarly to FIG. 4, the imaging portion 18, which is configured of a camera or the like which is at a lower end on a display surface side of the liquid crystal display or the like of the display device for a customer 15, is provided. In addition, FIG. 5 is top view illustrating a settlement processing state and a settlement processing waiting state. Here, A, B, C, D, and E respectively illustrate the customers, and in addition, during the settlement processing, the customers sequentially move in an arrow F direction. Therefore, the customers move for settlement from an E direction to an A direction. In other words, an E side is an end of line for settlement on an upstream side in a settlement moving direction, and an A side is a downstream side in the settlement moving direction. In addition, FIG. 5 illustrates that A is performing the settlement, and B to E are waiting for the settlement.

An operator scans the purchase desired merchandise which is brought to the location where the POS terminal 10 is installed by A who is the settlement customer, by using the bar code scanner 16 (Act 1). When the imagingportion 18 recognizes that scanning is started, imaging the customer on the upstream side in the settlement moving direction of A who is the settlement customer is started (Act 2). In addition, imaging the customer on the upstream side in the settlement moving direction of A who is the settlement customer can be performed with respect to B to E who are the customers on the upstream side in the settlement moving direction of A if the customers are further on the upstream side in the settlement moving direction than the center of the display device for a customer 15. Therefore, an imaging range of the camera 18 is set to be W which is further on the upstream side in the settlement moving direction than the center of the display device for a customer 15 in advance.

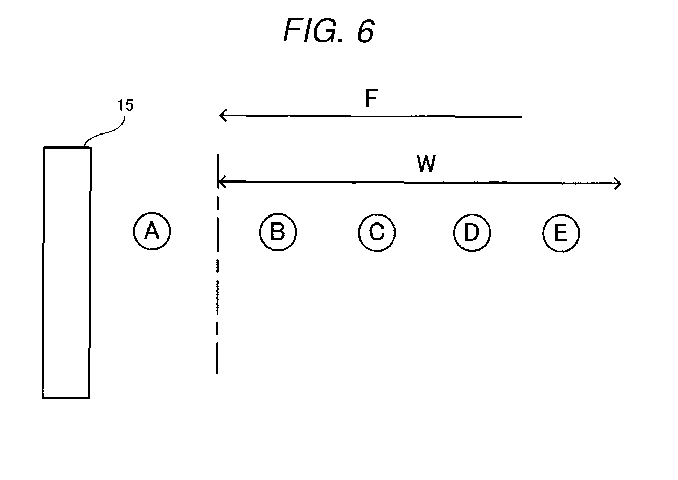

In addition, according to a layout, as illustrated in FIG. 6, there is a case where A who is the settlement customer faces the display device for a customer 15, and the settlement-awaiting customer sequentially waits on the rear surface thereof. In this case, the imaging range of the camera is set to be W which is further on a rear side than A.

The customer analysis program 70 is already stored in the ROM 54, and the properties, such as age or sex, of B, C, D, and E are predicted by the data imaged by the camera 18 and the customer analysis program 70 (Act 3). In addition, description regarding an analyzing method of the properties, such as age or sex, by using the imaged data will be omitted here since the method is already known. In addition, similarly to FIG. 6, if it is not easy to image only the settlement-awaiting customer due to a positional relationship between the settlement customer and the settlement-awaiting customer, the settlement customer and the settlement-awaiting customer may be imaged at the same time, and the settlement customer may be removed by the customer analysis program 70.

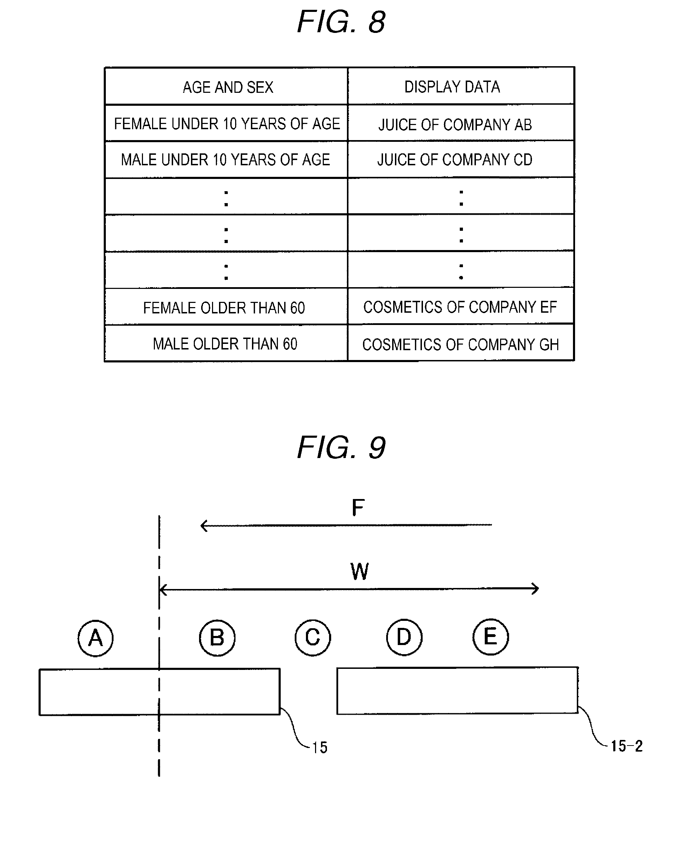

In addition, the customer display data storing portion 71 is provided in the ROM 54. Similarly to an example in FIG. 8, in the customer display data storing portion 71, the data regarding a manner of displaying for each age and sex group is stored. In addition, data which is the data of the customer display data storing portion 71, but which is sent by the store server 20 in advance is stored. However, a customer display data creating portion may be provided in a separate POS terminal 10, and here, the created data may be displayed. In addition, in the display condition setting portion 72, a condition of the order of display in the display device for a customer 15 is stored in advance. For example, conditions can be set arbitrarily by the store side, such as a condition that only the information for B who is the next settlement target is displayed, or a condition that the information for B, C, D, and E is displayed every 10 seconds.

In the description below, as a result of the analysis after imaging, B is a female customer who is under 10 years of age, C is a male customer who is under 10 years of age, D is a female customer who is older than 60, and E is a male customer who is older than 60. In addition, it is described that a condition that the information for B, C, D, and E is displayed every 10 seconds is stored in the display condition setting portion 72.

As a result of the analysis after the imaging, since the predicted result of the properties, such as age or sex, of B, C, D, and E is calculated, in accordance with the condition stored in the display condition setting portion 72, in the display device for a customer 15, a display for sales promotion of juice of a company AB is performed for 10 seconds, a display for sales promotion of juice of a company CD is performed for 10 seconds, a display for sales promotion of cosmetics of a company EF is performed for 10 seconds, and a display for sales promotion of cosmetics of a company GH is performed for 10 seconds (Act 4).

Next, the control portion 51 sends the intrinsic merchandise code of the merchandise which is obtained by scanning (Act 1) the merchandise to the store server 20.

Next, the merchandise information storing portion 21 stores the merchandise data which corresponds to the sent merchandise code in the merchandise information temporary storing portion 73 of the POS terminal 10 (Act 5).

Next, the control portion 51 confirms whether or not the next operation is scanning (Act 6). When scanning all of the merchandise is not completed, here, the next merchandise is scanned (Y in Act 6).

When the operator completes scanning all of the merchandise (N in Act 6), the operator receives the membership card from the customer and acquires a customer number by the reader-writer 17 (Act 7). Then, the obtained customer number is sent to the store server 20. The customer information storing portion 22 stores the customer data which corresponds to the sent customer number in the customer information temporary storing portion 74 of the POS terminal 10 (Act 8).

Next, the control portion 51 calculates settlement price from the merchandise information which is stored in the merchandise information temporary storing portion 73. The operator receives the settlement money from the customer and completes the settlement (Act 9). When the settlement is completed, the receipt is output by the receipt printer 14 (Act 10), and the receipt is handed to the customer. After this, the information of the customer information temporary storing portion 74 is overwritten in the customer information storing portion 22 of the store server 20 and the data is updated (Act 11). In addition, here, the overwritten information is information regarding the recent use date, or the like. When the data is updated, the calculation processing is ended (Act 12).

According to the embodiment as described above, the imaged data of the settlement-awaiting customer is interpreted, the properties, such as age or sex, are predicted, and the sales promotion information which is considered as appropriate for the customer having the properties is displayed in the display device for a customer. Accordingly, compared to a display of the sales promotion information which is displayed for an unspecified large number of customers, the sales promotion effect is improved.

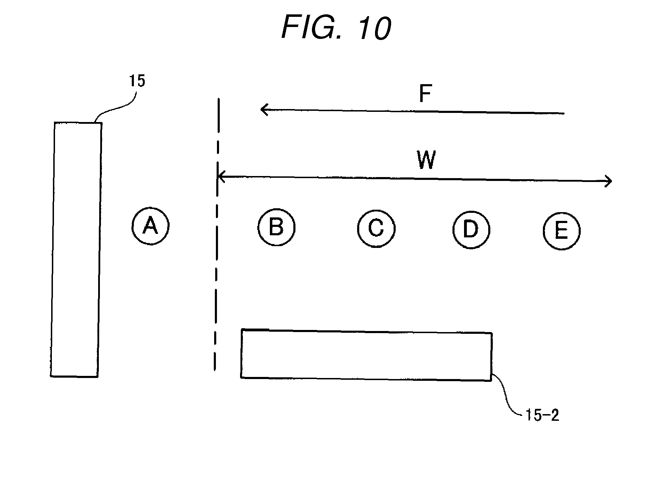

In addition, the imaging range for imaging the settlement-awaiting customer is set to be further on the upstream side in the moving direction of the settlement-awaiting customer than a center portion of the display device for a customer. Accordingly, a possibility of imaging the settlement customer is reduced. In addition, similarly to FIG. 9, even when a second display device for a customer 15-2 is provided in addition to the display device for a customer 15, inside the plurality of display devices for a customer, if the imaging range is set to be further on the upstream side in the moving direction of the settlement-awaiting customer than the center portion of the display device for a customer on the most downstream side of the settlement-awaiting customer in the moving direction, the possibility of imaging the settlement customer is reduced. In addition, according to the layout of the store, similarly to FIG. 10, there is a case where A who is the settlement customer faces the display device for a customer 15, and the settlement-awaiting customers sequentially wait on the rear surface thereof. Even in this case, the imaging range of the camera which is similar to the camera described above may be set to be W which is further on the rear side than A, or the settlement customer and the settlement-awaiting customer may be imaged at the same time, and then, the settlement customer may be removed by the customer analysis program 70.

In addition, the display is performed in the display device for a customer 15 or the second display device for a customer 15-2, but it is particularly desirable that the display be performed for a waiting person on the most upstream side in the moving direction of the settlement-awaiting customer among the plurality of settlement-awaiting customers. For example, when the settlement-awaiting customers are in line in the order of B, C, D, and E, as illustrated in FIGS. 5, 6, 9 and 10, even if the sales promotion information for B is displayed, there is a possibility that B hesitates to come out from the line, to find the merchandise, and then, to stand at the end of the line of the settlement-awaiting customers again. In particular, when the customers wait for the settlement for a long time, the possibility is high. However, in a case of E, compared to a case of B, the waiting time for the settlement is short, and there is a high possibility of coming out from the line, finding the merchandise, and then, standing at the end of the line of the people who wait for settlement again, and there is a possibility of purchasing the merchandise of the sales promotion information.

In addition, when there is no settlement-awaiting customer, the display content in the display device for a customer 15 may be the display for an unspecified large number of customers.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope of the inventions.

## Claims

1. A merchandise sales data processing apparatus, comprising:
a scanner which obtains an intrinsic merchandise code which is provided in a sales merchandise;
a display device for an operator which displays information with respect to a salesperson;
a display device for a customer which displays information with respect to a settlement customer or at least one of settlement-awaiting customers;
an imaging portion which images the settlement-awaiting customer;
an image interpreting portion which calculates properties from data imaged by the imaging portion;
a customer display data storing portion which stores data displayed for each property, with respect to the display device for a customer; and
a display condition setting portion which sets a display condition of customer display data.

2. The apparatus according to Claim 1,
wherein an imaging range of the imaging portion is a sales target customer side who is at an end of the line of the settlement-awaiting customers rather than a center portion of the display device for a customer.

3. The apparatus according to Claim 1 or 2,
wherein a display condition of customer display data in the display condition setting portion is display data for the customer who is at the end of the line of the settlement-awaiting customers among the plurality of settlement-awaiting customers.

4. The apparatus according to any one of Claims 1 to 3,
wherein imaging the settlement-awaiting customer is continuously performed by a scanner which obtains the intrinsic merchandise code provided in the sales merchandise.

5. A merchandise sales data processing system, comprising:
a merchandise sales data processing apparatus, including a scanner which obtains an intrinsic merchandise code which is provided in a sales merchandise; a display device for an operator which displays information with respect to a salesperson; a display device for a customer which displays information with respect to a settlement customer or at least one of settlement-awaiting customers; an imaging portion which images the settlement-awaiting customer; an image interpreting portion which calculates properties from data imaged by the imaging portion; a customer display data storing portion which stores data displayed for each property, with respect to the display device for a customer; and a display condition setting portion which sets a display condition of customer display data; and
a store server including a merchandise information storing portion which stores merchandise information, a customer information storing portion which stores information of a customer, and a data managing portion for each customer group which manages the provided information which is created for each property, such as age or sex.
